(19) Europäisches Patentamt
European Patent Office
Office européen des brevets

(11) **EP 1 992 934 A1**

(12) **EUROPEAN PATENT APPLICATION**
published in accordance with Art. 158(3) EPC

(43) Date of publication:
**19.11.2008 Bulletin 2008/47**

(51) Int Cl.:
***G01N 11/10*** *(2006.01)*

(21) Application number: **06843426.5**

(22) Date of filing: **27.12.2006**

(86) International application number:
**PCT/JP2006/326044**

(87) International publication number:
**WO 2007/099687 (07.09.2007 Gazette 2007/36)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.02.2006 JP 2006053935**

(71) Applicant: **Nagaoka University of Technology Nagaoka-shi, Niigata 9402188 (JP)**

(72) Inventors:
• **TAKAHASHI, Tsutomu**
  **Nagaoka-shi, Niigata 940-2188 (JP)**

• **SHIRAKASHI, Masataka**
  **Nagaoka-shi, Niigata 940-2188 (JP)**
• **KAWANO, Toshihiro**
  **Nagaoka-shi, Niigata 940-2188 (JP)**

(74) Representative: **Beetz & Partner Patentanwälte Steinsdorfstrasse 10 80538 München (DE)**

(54) **FLUID ANALYSIS METHOD AND FLUID ANALYSIS DEVICE**

(57) There is provided a fluid analysis method and its device which are capable of easily analyzing a normal stress difference of a low-viscosity fluid in addition to that of a high-viscosity fluid. A shearing fluidity is applied to a non-Newtonian fluid 9 within a lateral-side gap by pushing a cylindrical bob 2 into a container 6. At that time, reactive force F applied to the cylindrical bob 2 is measured. Then, by practicing an arithmetic process in a given form using the reactive force F and each of conditions input by a user, the normal stress difference of the low-viscosity non-Newtonian fluid 9 which is hard to form in a solid state can be certainly determined. Thus, with respect to the low-viscosity non-Newtonian fluid 9 in addition to the high-viscosity non-Newtonian fluid 9, the normal stress difference can be easily analyzed.

FIG.1

**Description**

TECHNICAL FIELD

The present invention relates to a fluid analysis method and a fluid analysis device, which are suitably applied to a viscometric measurement device employed for analyzing, e.g., a non-Newtonian fluid.

BACKGROUND ART

Heretofore, a rotating viscometer has been known in which after immersing a cylindrical bob (a rotor) fitted on a rotating shaft in a fluid to be measured, the rotating shaft is rotated and thus the viscosity of the fluid is measured based on a viscous drag force applied to the cylindrical bob by the fluid at that time (refer to patent document 1, for example). Patent Document 1: Japanese unexamined patent application publication No.H6-207898

DISCLOSURE OF THE INVENTION

Problem to be solved by the Invention

Whilst a rotating viscometer structured in this manner enables the measurement of shear viscosity, normal stress differences which largely affect formability in a molding process of chemical fiber and plastic have conventionally been unable to be measured. Therefore, when measuring such normal stress difference, a conical disc type viscosity measurement device (so-called cone-plate type rheometer) has been employed in the past.

In practice, the conical disc type viscosity measurement device is arranged with a conical unit on its upper portion. Besides, the device has a structure where a discoid unit is arranged in a lower portion so as to be opposed to the top of the conical unit, so that the fluid to be subjected to the normal stress difference measurement can be sandwiched between these conical and discoid units.

According to such conical disc type viscosity measurement device, the normal stress difference of the fluid can be determined by rotating, e.g., the conical unit under that condition to detect a vertically lifting force developed in association with the rotation.

The conical disc type viscosity measurement device thus structured is effective for a high-viscosity fluid which can be sandwiched between the conical unit and the discoid unit. However, with respect to a low-viscosity fluid that is hard to be formed into a solid state and thus hard to be sandwiched between the conical unit and the discoid unit, the low-viscosity fluid outflows between the conical unit and the discoid unit, resulting in a difficulty in determining the normal stress difference thereof. Therefore, there has been a problem that the normal stress difference of the low-viscosity fluid is hard to analyze.

In view of the above problems, it is an object of the present invention to provide a viscosity measuring method and a viscosity measuring device by which the normal stress difference not only of the high-viscosity fluid but also of the low-viscosity fluid can be easily analyzed.

Mean for solving the Problem

A fluid analysis method according to a first aspect of the present invention comprises steps of: pushing a bob into a container containing fluid to be measured to apply a shearing fluidity to the fluid inside the container, measuring reactive force applied by the fluid to the bob when the bob is pushed into the fluid, and calculating force for pushing up the bob by the fluid based on an outside dimension of the bob and then calculating the normal stress difference based on the push-up force, the reactive force, which have been calculated and a horizontal cross-sectional area of a gap between the bob and the container.

A fluid analysis method according to a second aspect of the present invention is one where the step of calculating the normal stress difference determines push-down force applied to the bob by subtracting the push-up force from the reactive force and then the normal stress difference is calculated by dividing the push-down force by the horizontal cross-sectional area of the gap.

A fluid analysis method according to a third aspect of the present invention is one where the step of calculating the normal stress difference calculates the push-up force by summing up increased buoyant force due to pushing the bob into the fluid, bottom face pushing up drag force applied to a bottom face of the bob, and viscous drag force applied to the bob within the gap.

A fluid analysis device according to a fourth aspect of the present invention is equipped with a push-in means which pushes the bob into the container containing the fluid to be measured to apply the shearing fluidity to the fluid within the container, a measuring means which measures the reactive force applied by the fluid to the bob when the bob is pushed into the fluid, and a normal stress difference calculating means which calculates the push-up force applied by the fluid to the bob based on the outside dimension of the bob and then calculates the normal stress difference based on the push-up force and the reactive force which have been calculated, and the horizontal cross-sectional area of the gap between the bob and the container.

A fluid analysis device according to a fifth aspect of the present invention is one where the normal stress difference calculating means determines the push-down force applied to the bob by subtracting the push-up force from the reactive force and then calculates the normal stress difference by dividing the push-down force by the horizontal cross-sectional area of the gap.

A fluid analysis device according to a sixth aspect of the present invention is one where the normal stress difference calculating means calculates the push-up force by summing up the increased buoyant force due to pushing the bob into the fluid, the bottom face pushing up drag force applied to the bottom face of the bob, and the viscous drag force applied to the bob within the gap.

Effects of the invention

According to the first to fourth aspects of the present invention, the shearing fluidity is applied to the fluid within the container by pushing the bob into the container and then the normal stress difference of the fluid is determined based on the reactive force which has been obtained at that time and was applied to the bob. Hence, the normal stress difference can be certainly determined even for the low-viscosity fluid hard to form into a solid state, thus permitting the normal stress difference to be easily analyzed with respect to the low-viscosity fluid in addition to the high-viscosity fluid.

According to the second to fifth aspects of the present invention, the normal stress difference can be determined from the reactive force, the push-up force, and the horizontal cross-sectional area of the gap.

According to the third to sixth aspects of the present invention, the push-up force of the fluid can be determined from the increased buoyant force, the bottom face pushing up drag force, and the viscous drag force. Hence, based on the results, the normal stress difference of the fluid can be determined.

BRIEF DESCRIPTION OF THE DRAWINGS

FIG. 1 is a perspective view illustrating an overall structure of a viscosity measuring device according to the present invention.
FIG. 2 is a vertical sectional view illustrating how a drag force works when a cylindrical bob has been pushed into a container.
FIG. 3 is a horizontal sectional view and a vertical sectional view illustrating the detailed structure of a cylindrical bob and a container.
FIG. 4 is a block diagram illustrating a circuit structure of a viscosity measuring device.
FIG. 5 is a timing chart indicating a timing at which the cylindrical bob is pushed in.
FIG. 6 is a schematic view showing a monitor display example of an analytical result.

BEST MODE FOR CARRYING OUT THE INVENTION

Next is a description of a preferred embodiment of the present invention with reference to the accompanying drawings.

(1) Outline of normal stress difference measurement

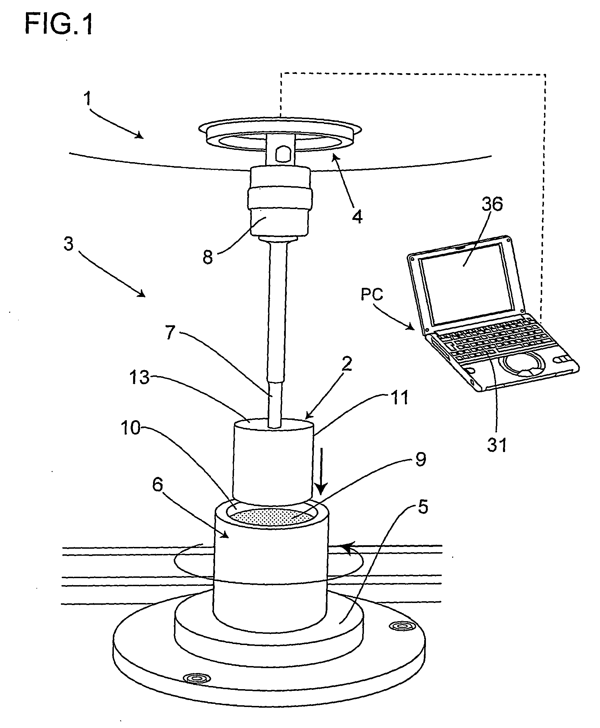

In FIG. 1, numeral symbol 1 denotes a viscosity measuring device which performs a fluid analysis method according to the present invention. This viscosity measuring device 1 is made up of a rotating viscometer (hereinafter simply referred to as a viscometer) 3 which has heretofore been employed for measuring viscosity of a fluid and a personal computer PC which is connected with the viscometer and has been loaded with a normal stress difference processing program for measuring a normal stress difference of the fluid.

In practice, the viscometer 3 is composed of an elevating motion driving unit 4 acting as a push-in means, a basal platform 5, and a container 6 located on the basal platform 5. The elevating motion driving unit 4 is mounted with a rod-like bob supporting member 7 in such a manner as to allow the bob supporting member 7 to go up and down along the vertical direction. A cylindrical bob 2 formed in a cylindrical shape is freely detachably mounted on an apical end of the bob supporting member 7, while a load cell 8 acting as a measuring means is provided between the cylindrical bob 2 and the elevating motion driving means 4.

The viscometer 3 has a receiving portion 10 of the container 6 for receiving a non-Newtonian liquid 9 that is an object to be measured. In practice, when measuring the normal stress difference of the non-Newtonian liquid 9, the bob supporting member 7 is first allowed to go down for a given period of time by using the elevating motion driving unit 4 and thereby the cylindrical bob 2 is immersed in the non-Newtonian liquid 9 and then is stopped once. Thereafter, in the viscometer 3, the bob supporting member 7 is allowed to slide at a given pushing velocity V, thus pushing the cylindrical bob 2 into the non-Newtonian liquid 9.

At that time, in the viscometer 3, viscous resistance or drag which is applied to the cylindrical bob 2 from the non-Newtonian liquid 9 is applied directly to the load cell 8 as reactive force. Consequently, the viscometer 3 measures the reactive force in the load cell 8 and then sends out the measured result obtained by the load cell 8 to the personal computer PC.

As a result, the personal computer PC performs arithmetic processing using the measured result based on a given formula (described later), thus allowing the normal stress difference of the non-Newtonian liquid 9 to be calculated.

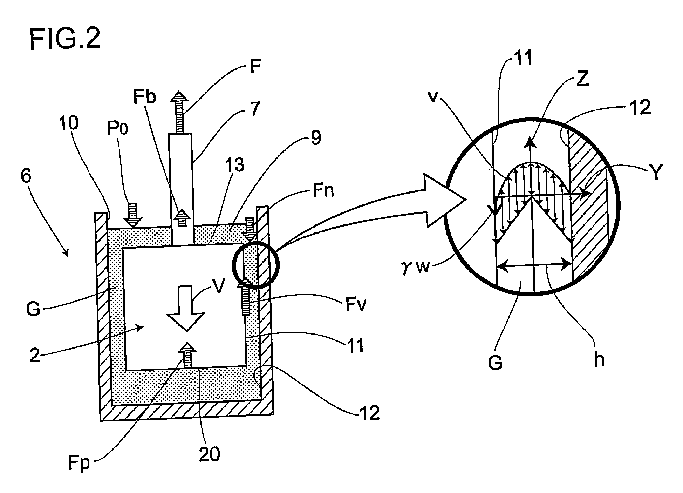

In other words, according to the fluid analysis method of the present invention, as shown in FIG. 2, the cylindrical bob 2 is pushed into the receiving portion 10 of the container 6. Hence, the non-Newtonian liquid 9 within the receiving portion 10 passes through a side space G between a side wall part 11 of the cylindrical bob 2 and an inner wall 12 of the receiving portion 10 to be pushed out on a top surface part 13 of the cylindrical bob 2.

Then, a distance h between the side wall part 11 of the cylindrical bob 2 and the inner wall 12 of the receiving portion 10 is narrow as compared to a diameter of the receiving portion 10. Hence, a flow of the non-Newtonian liquid 9 passing through the distance h and flowing toward the top surface part 13 of the cylindrical bob 2 can be considered to be a two-dimensional flow.

In this case, as shown in FIG. 2, velocity distribution v approximate to the two-dimensional Poiseuille's flow is exhibited in the side space G. In practice, however, this velocity distribution v takes an asymmetric shape since the cylindrical bob 2 is moving downward. In the meantime, in FIG. 2, the direction of the flow is indicated by a Z-axis while a width direction between the side wall part 11 of the cylindrical bob 2 and the inner wall 12 of the receiving portion 10 (i.e., between two curved surfaces) is indicated by a Y-axis, and further a wall surface shearing velocity in the side wall part 11 of the cylindrical bob 2 is indicated by $\gamma_w$.

In addition to this, the side wall part 11 of the cylindrical bob 2 is formed so as to keep a constant distance h to the inner wall 12 of the container 10 from its top surface part 13 to its bottom face 20. Hence, a shearing fluidity field can be formed in the side space G due to the bob being pushed into the non-Newtonian liquid 9.

On the vertical reactive force F generated by pushing the cylindrical bob 2 into the non-Newtonian liquid 9, are allowed to act six factors, i.e., a flow-in loss, viscous drag force Fv generated when the non-Newtonian liquid 9 passes through the side space G, a flow-out loss, a push-up force (hereinafter referred to as a bottom face pushing up drag force) Fp due to a pressure increase in the bottom face 20 of the cylindrical bob 2, a drag force (hereinafter simply referred to as increased buoyant force) Fb due to a buoyant force increase resulting from a volume increase below the fluid surface, and a push-down force Fn resulting from normal stress generated by the shearing fluidity. In the meantime, a symbol Po in FIG. 2 denotes an atmospheric pressure and therefore the push-down force Fn does not act on a non-elastic (i.e., having no normal stress difference) Newtonian fluid.

Among these forces, the force due to the flow-in loss and the force due to the flow-out loss can be neglected since their flow volumes are small as compared to volumes that yield the viscous drag force Fv and the bottom face pushing up drag force Fp. Accordingly, the four forces, i.e., the viscous drag force Fv, the bottom face pushing up drag force Fp, the increased buoyant force Fb and the push-down force Fn can be considered to act on the reactive force F generated by pushing the cylindrical bob 2 into the non-Newtonian liquid 9.

Among these forces, the force (hereinafter referred to as push-up force) for pushing up the cylindrical bob 2 becomes equal to the force resulting from summing up the increased buoyant force Fb, the bottom face push-up force Fp and the viscous drag force Fv. Hence, the formula expressing the relationship among the push-up force (equal to the sum of the increased buoyant force Fb, the bottom face push-up force Fp and the viscous drag force Fv), the push-down force Fn and the reactive force F measured by the load cell 8 is expressed by

$$\text{(Formula 1)}$$

$$Fn = F - Fv - Fp - Fb \qquad (1)$$

In practice, when measuring the reactive force F by the load cell 8, the cylindrical bob 2 has been allowed to be entirely submerged in the non-Newtonian fluid 9 in advance. Therefore, there occurs no difference in buoyant force acting on the cylindrical bob 2 before and after pushing the cylindrical bob 2 into the non-Newtonian fluid 9. Part of the bob supporting member 7 is, however, additionally sunk into the non-Newtonian fluid 9, thereby causing an increase in buoyant force by just that much. Besides, by pushing the cylindrical bob 2 into the non-Newtonian fluid 9, a liquid level of the non-Newtonian fluid 9 rises, also causing an increase in buoyant force by just that much.

Accordingly, calculated are the buoyant force generated due to the sinking of the bob supporting member 7 into the non-Newtonian fluid 9 and the buoyant force due to the non-Newtonian fluid 9' level rising which is resulting from pushing the cylindrical bob 2 into the non-Newtonian fluid 9. Then, the increased buoyant force can be determined by summing up these buoyant forces.

The flow field of the non-Newtonian fluid 9 in the side space G can be calculated and thereby the pressure loss due to the viscosity can be determined. Based on the pressure gradient, a pressure rising amount $\Delta P$ in the bottom face 20 of the cylindrical bob 2 is calculated, thus determining the bottom face pushing up drag force Fp based on the pressure rising amount $\Delta P$.

Further, the flow volume Q is determined to estimate the velocity distribution v in the side space G. As a result, wall surface shear stress applied to the side wall part 11 of the cylindrical bob 2 is estimated, so that based on the wall surface shear stress, the viscous drag force Fv can be determined.

According to the above discussion, the push-down force Fn caused by the normal stress difference is determined using the formula (1) described above and then a normal stress difference N1 can be determined by the following formula:

$$\text{(Formula 2)}$$
$$N1 = Fn \,/\, A_{gap} \qquad (2)$$

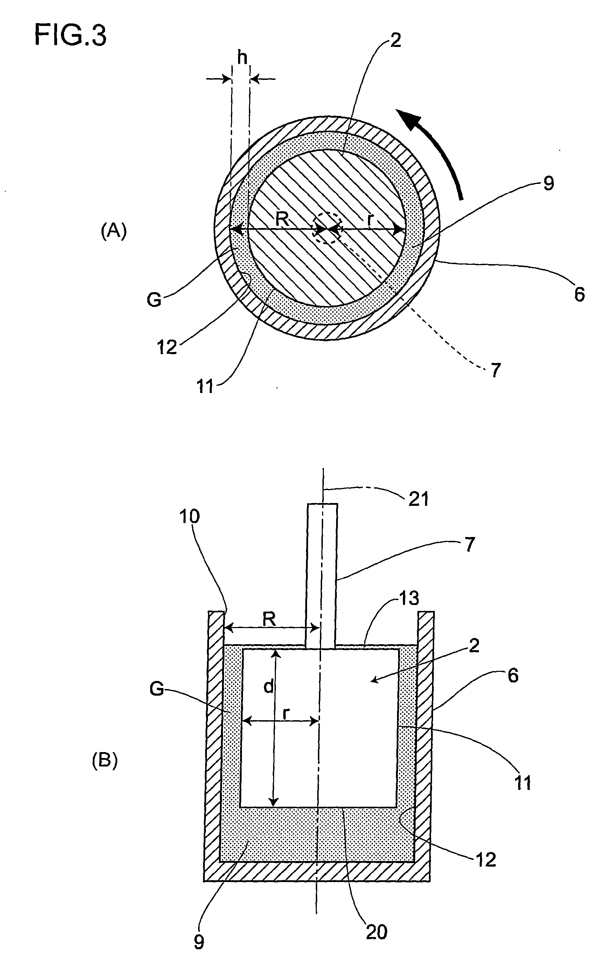

where $A_{gap}$ represents the horizontal cross-sectional area of the side space G as shown in FIG. 3(A) and can be determined by $\pi \cdot R^2 - \pi \cdot r^2$. Additionally, as shown in FIG. 3(B), R represents a radius of the receiving portion 10, while r represents a radius of the cylindrical bob 2.

Further, a push-in velocity V of the cylindrical bob 2 is accordingly changed to calculate an average shear rate from the velocity distribution v described above, so that the relationship between the normal stress difference N1 and the average shear rate can be analyzed.

(2) Viscosity measuring device

As shown in FIG. 1, the viscosity measuring device 1 for performing the above fluid analysis method according to the present invention includes a viscometer 3 connected with the personal computer PC.

The viscometer 3 pushes the cylindrical bob 2 into the receiving portion 10 of the container 6 to make it possible to measure the vertical reactive force F applied by the non-Newtonian fluid 9 to the cylindrical bob 2 by using the load cell 8.

Incidentally, this viscometer 3 can rotate the container 6 via a basal platform 5 in the conventional way (see FIG. 3 (A)) and can measure drag force which is applied by the non-Newtonian fluid 9 to the cylindrical bob 2 and which is directed to the rotational direction. In addition, in this case, though the basal platform 5 is formed so as to be freely rotatable, the bob supporting member 7 may be formed so instead.

In practice, as shown in FIG. 3 (B), the container 6 is formed to be bottomed and cylindrical and is placed on the basal platform 5 so that its central axis coincides with the central axis 21 of the cylindrical bob 2. Besides, the container 6 can house the whole body of the cylindrical bob 2 that has come down into the receiving portion 10.

The receiving portion 10 is formed in the same shape as a horizontal cross-sectional shape of the cylindrical bob 2 and besides its radius R is selected so as to be larger than the radius r of an upper surface 13 of the cylindrical bob 2. Then, when the cylindrical bob 2 is housed within the receiving portion 10, the side space G acting as a cylindrical flow path can be formed between an inner wall 12 of the receiving portion 10 and the side wall part 11 of the cylindrical bob 2 (see FIG. 3 (A)).

Here, the side space G is selected smaller as compared to the radius R of the receiving portion 10 and the radius r of the cylindrical bob 2. Hence, a non-Newtonian fluid that has flowed into the side space G can be regarded as a two-dimensional flow.

The cylindrical bob 2 is made of, e.g., stainless steel and is formed so as to keep a constant distance h between the lateral side and the inner wall 12 in the receiving portion 10. Hence, when being pushed into the receiving portion 10, the cylindrical bob 2 provides the shearing fluidity to the non-Newtonian fluid 9 in the cylindrical shaped side space G.

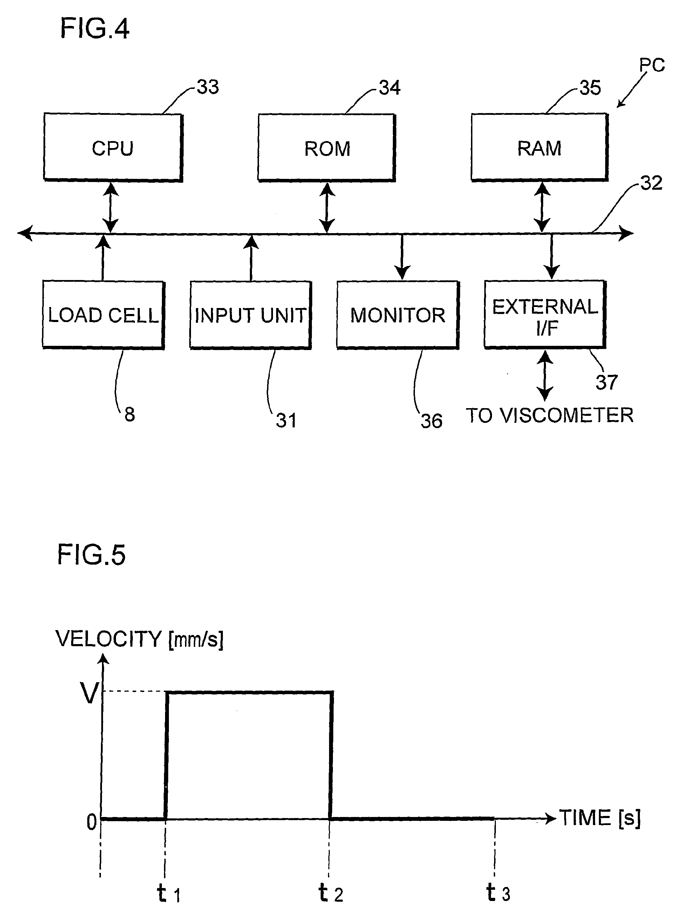

And now, as shown in FIG. 4, various sorts of data relevant to the measurement of the normal stress difference are input to the personal computer PC by operating an input unit 31 by a user, including, e.g., a keyboard.

The input unit 31 supplies the data input by the user to a CPU 33 via a data bus 32. The CPU 33 acting as a normal stress difference calculating means is designed to measure the normal stress difference in accordance with a normal-stress-difference measurement processing program stored in a ROM (Read Only Memory) 34. Then, the CPU 33 determines the normal stress difference N1 using the data input from the input unit 31 and reactive force data obtained from the load cell 8 via an external interface 37. At that time, the CPU 33 measures the normal stress difference while storing the data such as the calculated results or the like in the RAM (Random Access Memory) 35 as needed. The CPU 33 displays the normal stress difference N1 as the measured results on a display unit 36 in the various display modes.

Here, when a user instructs the start of measuring the normal stress difference by operating the input unit 31 by a user, the CPU 33 measures the normal stress difference in accordance with the normal-stress-difference measurement processing program stored in a ROM 34. In this case, the CPU 33 sends out a drive signal to the viscometer 3 via the external interface 37.

Accordingly, the viscometer 3 allows the cylindrical bob 2 to go down by driving the elevating motion driving means 4 to get the whole body of the cylindrical bob 2 immersed within the non-Newtonian fluid 9 in advance before the start of the measurement performed by the load cell 8, as shown in FIG. 3 (A).

After that, the viscometer 3 starts to measure the reactive force F by using the load cell 8 and then, as shown in FIG. 5, keeps the cylindrical bob 2 in a resting state till a given period of time t1 (e.g., 10 sec) elapses from the start of the measurement. Besides, in the viscometer 3, the elevating motion driving means 4 starts again to be driven and thereby the cylindrical bob 2 is pushed into the non-Newtonian fluid 9 at the push-in velocity V till a given period of time t2 (e.g., 50 sec) elapses after a given period of time t1 had elapsed and then when the given period of time t2 has elapsed, the cylindrical bob 2 is stopped.

Additionally, the viscometer 3 continues to measure the reactive force F by the load cell 8 till the given period of time t2 elapses from the start of the measurement and further continues to measure the reactive force F by the load cell 8 till a given period of time t3 (e.g., 50 sec) elapses after a given period of time t2 has elapsed. Then, the viscometer 3 sends out a series of these data measured to the personal computer PC.

Incidentally, in this embodiment, the range in which the cylindrical bob 2 can be pushed into the receiving portion 10 is as small as, e.g., 6mm. Hence, a push-in duration $\Delta t1$ is fixed at 50sec, thus enabling the push-in velocity V of the cylindrical bob 2 to be accordingly set between 0.001 and 0.1mm/s.

The CPU 33 of the personal computer PC is designed so as to once store the reaction force data received from the viscometer 3 in the RAM 35. The CPU 33 calculates the viscous drag force Fv, the bottom face pushing up drag force Fp, and the increased buoyant force Fb in order to calculate the push-down force Fn due to the normal stress difference using the above formula (1).

Here, the increased buoyant force Fb is determined by the following formula (3):

[Formula 3]

$$Fb = \rho \pi R^2{}_{shaft} \bullet \left( 1 + \frac{R^2{}_{shaft}}{R^2 - R^2{}_{shaft}} \right) Vtg \qquad (3)$$

where $\rho$ represents a degree of density of the non-Newtonian fluid 9 that is a measuring object and besides $R_{shaft}$ and g denote a radius of the bob supporting member 7 and gravitational acceleration, respectively.

In addition, the first (left) term in the bracket of the formula (3) denotes the buoyant force yielded due to the sinking of the bob supporting member 7, and the remaining second (right) term in the bracket of the formula (3) denotes the buoyant force yielded due to the rise of the liquid level of the non-Newtonian fluid 9 discharged from the side space G.

Now, in formula (3), each of the radius $R_{shaft}$ of the bob supporting member 7, the degree of the density $\rho$ of the fluid, etc. is input by a user via the input unit 31 and then the CPU determines Fb based on the push-in velocity V and the push-in duration $\Delta t1$.

The viscous drag force Fv is determined by the following formula (4):

[Formula 4]

$$Fv = \mu \cdot \gamma_w \cdot As \qquad (4)$$

where $\mu$ denotes a shear viscous coefficient of the non-Newtonian fluid 9 and has been measured in advance.

In addition, the shear viscous coefficient $\mu$ has been obtained based on the viscous drag force applied by the non-Newtonian fluid 9 to the cylindrical bob 2 when the container 6 was rotated after the cylindrical bob 2 was immersed within the non-Newtonian fluid 9 in the conventional way. As denotes a superficial area (a sidewall area) in the side wall part 11 of the cylindrical bob 2 and therefore can be determined from $2\pi rd$ (d denotes a height of the cylindrical bob 2). Further, $\gamma_w$ denotes a wall surface shear velocity and therefore can be determined from the velocity distribution v obtained by taking into account the power function at the inflow portion and ouflow portion of the side space G in the cylindrical bob 2

Incidentally, the velocity distribution v at the side space G is estimated by a flow volume Q per unit time. The velocity distribution v is, however, determined using equations such as the power function or the like after the relationship between a shear rate and a viscosity has been determined by the usual viscosity measurement. In addition, the flow volume Q is determined by the following formula:

[Formula 5]

$$Q = A_B \cdot v \qquad (5)$$

where $A_B$ denotes an area of the bottom face 20 in the cylindrical bob 2 and then can be determined from $\pi \cdot r^2$.

Further, the bottom face pushing up drag force Fp can be determined by the following formula:

[Formula 6]

$$Fp = A_B \cdot \Delta P \qquad (6)$$

where $\Delta P$ denotes a pressure rise amount applied to the cylindrical bob 2 and then can be determined based on an formula representing a pressure gradient.

Thus, the CPU 33 determines the push-down force Fn from the formula (1) using the reactive force F measured by the load cell 8 as well as calculating the viscous drag force Fv, the bottom face pushing up drag force Fp, and the increased buoyant force Fb.

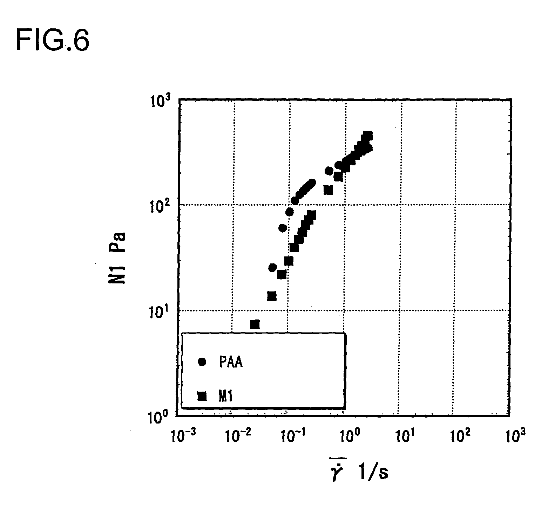

Further, the CPU 33 calculates an average shear rate based on the velocity distribution v and then, as shown in FIG. 6, visibly displays, on the monitor 36, the analyzed result which represents the relationship between the average shear rate and the normal stress difference N1.

For reference's sake, the analyzed result shown in FIG. 6 was obtained in cases where a water solution of polyacrylic acid (PAA) and an M1 fluid were employed as the non-Newtonian fluid 9. In this case, to the personal computer PC, a variety of data required are input for the normal stress difference measurement such as an area of the bottom face and a lateral-side area of the cylindrical bob 2, the push-in velocity V or the like by operating the input unit 31 by user. As a result, a user can apprehend a state of the normal stress difference N1 of the non-Newtonian fluid 9 analyzed at that time from a distributing state of the measured values displayed on the monitor 36.

Then, in the personal computer PC, a series of changes in the normal stress difference N1 depending on the average shear velocity is displayed on the monitor 36 for each of a water solution of PAA and M1 fluid, thus permitting a user to grasp a plurality of these analyzed results in a lump on one display screen.

(3) Behavior and effects

In the system described above, in the viscometer 3, the shearing fluidity is applied to the non-Newtonian fluid 9 within the container 6 by pushing the cylindrical bob 2 into the receiving portion 10 in which the non-Newtonian fluid 9 is contained.

In this case, in the viscometer 3, the receiving portion 10 and the cylindrical bob 2 pushed into the receiving portion 10 are formed the same in horizontal cross-sectional shape (the cross section is circular) and further are allowed to go up and down with the central axis 21 of the cylindrical bob 2 allowed to coincide with the central axis of the container 6. Hence, only by pushing the cylindrical bob 2 into the container 6, the shearing fluidity can be certainly and easily applied to the non-Newtonian fluid 9 in the side space G.

Further, in the viscometer 3, the reactive force F applied to the cylindrical bob 2 is measured at this time and then the results measured are sent out to the personal computer PC in real time.

Hence, in the personal computer PC, the push-up force (i.e., the increased buoyant force Fb, the bottom face pushing up drag force Fp, and the viscous drag force Fv) applied to the cylindrical bob 2 are calculated based on the outside dimension of the cylindrical bob 2, then calculating the push-down force Fn based on these push-up force and the reactive force F that have been calculated using the formula (1).

After that, in the personal computer PC, as shown in the formula (2), by dividing the push-down force Fn by the horizontal cross-sectional area $A_{gap}$ of the side space G, the normal stress difference N1 of the non-Newtonian fluid 9 can be determined.

As a result, in the viscometrical device 1, the shearing fluidity can be applied to the non-Newtonian fluid 9 within the container 6 by pushing the cylindrical bob 2 into the container 6. Hence, the non-Newtonian fluid 9 does not outflow from an inside of the container 6, thus enabling the normal stress difference N1 of the non-Newtonian fluid 9 which is hard to form in a solid state to be certainly and easily determined. Thus, the analysis of the normal stress difference N1 of the low-viscosity non-Newtonian fluid 9 can be facilitated.

Consequently, in the viscosity measuring device 1 acting as a fluid analysis device, by changing accordingly the push-in velocity V of the cylindrical bob 2 in the viscometer 3, the relationship between the average shear rate calculated from the velocity distribution v and the normal stress difference N1 depending on the average shear rate can be easily analyzed.

Besides, if the conventional rotating viscometer is used, when the normal stress difference measurement processing program for performing the arithmetic processing of the formulae (1) to (6) is loaded into the personal computer PC, the fundamental mechanism such as the elevating motion driving unit and the load cell which are built in the rotating viscometer are directly utilized to allow the normal stress difference to be measured, thus permitting the production cost of the viscosity measuring device 1 to be reduced.

Furthermore, in this case, it can eliminate the need of having a user separately prepare a device (e.g., a conical disc type viscometer) for measuring a normal stress difference. Hence, the normal stress difference can be easily measured with the trouble saved for the user by just that much.

As described above, in the present embodiment, the shearing fluidity is applied to the non-Newtonian fluid 9 in the side space G by pushing the cylindrical bob 2 into the container 6 and then the reactive force F applied to the cylindrical bob 2 is measured to practice the arithmetic processing in accordance with the formulae (1) to (6) using each condition input by a user. Hence, with respect to not only the high-viscosity non-Newtonian fluid 9 but also the low-viscosity non-Newtonian fluid 9 hard to form in a solid state, the normal stress difference can be certainly determined, thus permitting the normal stress difference in the low-viscosity non-Newtonian fluid 9 in addition to the high-viscosity non-Newtonian fluid to be easily analyzed.

In addition, the present invention is not limited to the embodiment described above and various modifications are possible. In the embodiment described above, the description has been given for the cases where the viscosity measuring device 1 in which the personal computer PC and the viscometer 3 have been independently provided. The present invention, however, is not limited to this structure and so a viscosity measuring device may be applied in which the personal computer PC and the viscometer 3 may be integrated into one system.

**Claims**

1. A fluid analysis method comprising steps of:

   pushing a bob into a container containing a fluid to be measured to apply a shearing fluidity to said fluid within said container,
   measuring a reactive force applied by said fluid to said bob when said bob is pushed into said fluid, and
   calculating a force for pushing up said bob by said fluid based on an outside dimension of said bob and then calculating a normal stress difference based on said push-up force calculated, said reactive force, and a horizontal cross-sectional area of a gap between said bob and said container.

2. The fluid analysis method according to claim 1, wherein said step of calculating said normal stress difference determines a push-down force applied to said bob by subtracting said push-up force from said reactive force and then said normal stress difference is calculated by dividing said push-down force by said horizontal cross-sectional area of said gap.

3. The fluid analysis method according to claim 1 or 2, wherein said step of calculating said normal stress difference calculates said push-up force by summing up:

   increased buoyant force due to pushing said bob into said fluid,
   bottom face pushing up drag force applied to a bottom face of said bob, and
   viscous drag force applied to said bob within said gap.

4. A fluid analysis device comprising:

   a push-in means which pushes a bob into a container containing a fluid to be measured to apply a shearing fluidity to said fluid within said container,
   a measuring means which measures reactive force applied by said fluid to said bob when said bob is pushed into said fluid, and
   a normal stress difference calculating means which calculates force for pushing up said bob by said fluid based on an outside dimension of said bob and then calculates a normal stress difference based on said push-up force calculated, said reactive force, and a horizontal cross-sectional area of a gap between said bob and said container.

5. The fluid analysis device according to claim 4, wherein said normal stress difference calculating means calculates push-down force applied to said bob by subtracting said push-up force from said reactive force and then calculates said normal stress difference by dividing said push-down force by said horizontal cross-sectional area of said gap.

6. The fluid analysis device according to claim 4 or 5, wherein said normal stress difference calculating means calculates said push-up force by summing up:

increased buoyant force due to pushing said bob into said fluid,
bottom face pushing up drag force applied to a bottom face of said bob, and
viscous drag force applied to said bob within said gap.

# FIG.1

# FIG.2

FIG.3

(A)

(B)

## FIG.4

## FIG.5

FIG.6

<div align="center">

**INTERNATIONAL SEARCH REPORT**

</div>

| | International application No. |
|---|---|
| | PCT/JP2006/326044 |

| A. CLASSIFICATION OF SUBJECT MATTER |
|---|
| *G01N11/10*(2006.01)i |
| |
| |
| According to International Patent Classification (IPC) or to both national classification and IPC |

| B. FIELDS SEARCHED |
|---|
| Minimum documentation searched (classification system followed by classification symbols) |
| G01N11/00-11/16, 3/00-3/62 |
| |
| |
| |
| Documentation searched other than minimum documentation to the extent that such documents are included in the fields searched |
|     Jitsuyo Shinan Koho       1922-1996   Jitsuyo Shinan Toroku Koho   1996-2007 |
|     Kokai Jitsuyo Shinan Koho  1971-2007   Toroku Jitsuyo Shinan Koho   1994-2007 |
| |
| Electronic data base consulted during the international search (name of data base and, where practicable, search terms used) |
|    JSTPlus(JDream2) |
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2001-59806 A (Kan'ichi SUZUKI),<br>06 March, 2001 (06.03.01),<br>Full text; all drawings<br>(Family: none) | 1-6 |
| A | JP 7-43287 A (Toki Sangyo Kabushiki Kaisha),<br>14 February, 1995 (14.02.95),<br>Full text; all drawings<br>(Family: none) | 1-6 |
| A | JP 2003-185565 A (Tomiichi HASEGAWA),<br>03 July, 2003 (03.07.03),<br>Full text; all drawings<br>& WO 2003/034039 A1 | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
|   30 January, 2007 (30.01.07) |   06 February, 2007 (06.02.07) |

| Name and mailing address of the ISA/ | Authorized officer |
|---|---|
|   Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/326044 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 5-72101 A  (Kabushiki Kaisha Kibun Shokuhin), 23 March, 1993 (23.03.93), Full text; all drawings (Family: none) | 1-6 |
| A | JP 6-11432 A  (Dainippon Ink And Chemicals, Inc.), 21 January, 1994 (21.01.94), Full text; all drawings (Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H6207898 B